# EUROPÄISCHE PATENTANMELDUNG

(11) **EP 1 557 402 A2**
(43) Veröffentlichungstag der Anmeldung: **27.07.2005**
(21) Anmeldenummer: 05100055.2
(22) Anmeldetag: 06.01.2005
(51) Int. Cl.: C04B 35/443, C04B 35/581, C04B 35/48, C04B 35/505, C04B 35/44

(54) **Transparente polykristalline Sinterkeramik kubischer Kristallstruktur**

(30) Priorität: 23.01.2004 DE 102004004259
(71) Anmelder: FRAUNHOFER-GESELLSCHAFT ZUR FÖRDERUNG DER ANGEWANDTEN FORSCHUNG E.V., 80686 München (DE)
(72) Erfinder: Krell, Andreas, 01217 Dresden (DE); Hutzler, Thomas, 01187 Dresden (DE)
(74) Vertreter: Rauschenbach, Marion

(57) **Zusammenfassung**

Die Erfindung bezieht sich auf das Gebiet der technischen Keramik und betrifft transparente polykristalline Sinterkeramiken kubischer Kristallstruktur für Verwendungen mit erhöhter mechanischer Beanspruchung, z.B. als Schutz- oder Panzerungskeramik.

Aufgabe der Erfindung ist es, Sinterkeramiken anzugeben, welche eine hohe Transmission von RIT > 75 % des theoretischen Maximalwertes mit einer deutlich verbesserten Härte verbinden.

Die Aufgabe wird gelöst durch transparente polykristalline Sinterkeramik kubischer Kristallstruktur mit einer an 0,8 mm dicken polierten Scheiben und für Licht einer Wellenlänge zwischen 600 und 650 nm gemessenen wahren In-Line-Transmission RIT > 75 % des theoretischen Maximalwertes und einer mittleren Korngröße D im Bereich 60 nm < D < 10 µm.

## Beschreibung

Die Erfindung bezieht sich auf das Gebiet der technischen Keramik und betrifft transparente polykristalline Sinterkeramiken kubischer Kristallstruktur für Verwendungen mit erhöhter mechanischer Beanspruchung, z.B. als Schutz- oder Panzerungskeramik.

Die für die Durchsichtigkeit (Transparenz) von Materialien verantwortliche Größe ist die zwecks Ausschluss von Streulicht aus der erfassten Intensität nur mit sehr engem Aperturwinkel von ca. 0,5 ° zu messende "wahre" (real) In-Line-Transmission (RIT).

Im Fall fehlender oder äußerst geringer Licht-Absorption wird die Transmission für optisch homogene Werkstoffe wie Glas oder für Einkristalle nur von der materialspezifischen, vom Brechungsindex n bestimmten Reflexion Rₛ = ((n-1)/(n+1))² an jeweils Vorder- und Rückseite begrenzt. Der daraus resultierende theoretische Höchstwert der Transmission Tₘₐₓ ist für hochtransparente Stoffe unter Berücksichtigung der Mehrfachreflexion Tₘₐₓ = (1-R) mit R = 2 Rₛ/(1⁺Rₛ) bzw. Tₘₐₓ = (1-Rₛ)² für Materialien geringer Transparenz, d.h. vernachlässigbarer Mehrfachreflexion; Tₘₐₓ beträgt z.B. für farblose Einkristalle wie Al₂O₃ (Korund, Saphir; n = 1,760 bzw. 1,768) ca. 85,8 %, für MgO·Al₂O₃-Spinell (n = 1,712-1,736) ca. 86,9 %, für Y₂O₃ (n = 1,78-1,79) ca. 85,3 % und für Y-Al-Granat (n = 1,833) ca. 84,1 %. Für ZrO₂ (n = 1,98-2,2) kann diese Grenze je nach Zusammensetzung in einem breiteren Bereich zwischen ca. 75 und 81 % schwanken.

Beim Lichtdurchgang durch die Gefüge gesinterter *polykristalliner* Keramiken wird RIT demgegenüber meist durch folgende Prozesse weiter gemindert:
1. diffuse Streuung an Poren (abhängig von Größe und Anzahl der Poren), und
2. speziell in nicht-kubischen Keramiken wie Korund (Alpha-Al₂O₃) zusätzliche Lichtstreuung durch Doppelbrechung bei jedem Übergang des Lichtstrahles von einem in den nächsten Kristallit des Gefüges.

Die Streuverluste müssen daher in allen Sinterkeramiken durch möglichst geringe Rest-Porosität und durch Porengrößen, die möglichst kleiner sind als die Wellenlänge des Lichtes, gering gehalten werden.
Da in kubischen Sinterkeramiken nur dieser erstgenannte Streumechanismus auftritt, unterliegt deren Transparenz somit keinem unmittelbaren Korngrößeneinfluss. Dagegen muss speziell in Werkstoffen nicht-kubischer Kristallstruktur der zweite Streubeitrag entweder durch extremes Kornwachstum (d.h. Annäherung an den einkristallinen Zustand) oder durch extrem kleine Gefügekorngrößen reduziert werden. Für nanokristalline Gefüge (z.B. tetragonales ZrO₂ mit Korngrößen um oder unter 60 nm (V. Srdic u.a., J. Am. Ceram. Soc. (2000), 1853-1860) ist schließlich eine hohe Transparenz unabhängig vom Grad der tetragonalen Verzerrung trivialerweise gegeben, wenn das Herstellungsverfahren so gestaltet ist, dass auch letzte Hundertstel Prozent von Rest-Porosität vermieden werden.

Diese in Abhängigkeit von der Kristallstruktur unterschiedliche Situation macht verständlich, weshalb für die fortgeschrittensten (feinkörnigsten, porenarmen) Sinterkorunde (trigonal) bisher bei Dicken um oder über 1 mm keine RIT-Werte > 70 % erzielt werden konnten, während z.B. für MgO·Al₂O₃-Spinell (kubisch) Messwerte um 80 % und somit nahe dem theoretischen Maximum berichtet wurden. Als besonderer Vorteil sehr hoher RIT ist auch zu vermerken, dass bei Annäherung an das theoretische Maximum der Dickeneinfluss schwindet, während umgekehrt eventuelle größere Streuverluste naturgemäß mit der Dicke des lichtstreuenden Materials zunehmen und die Durchsichtigkeit dann nur noch für sehr dünne Komponenten gewährleistet ist. Somit ist ein solcher Dickeneinfluss ein klares Kriterium dafür, dass erhebliche Lichtstreuung - also niedrige Transparenz - vorliegt und eventuelle hohe Transmissionsmesswerte auf einen zu großen, die Messung der wahren In-Line-Transmission unmöglich machenden Aperturwinkel zurückgehen.

Wegen dieses Vorzuges kubischer Materialien wurden schon früh Versuche zur Herstellung heißgepresster transparenter Keramiken aus solchen Stoffen unternommen, zwecks Optimierung der mechanischen Eigenschaften zunächst verbunden auch mit dem Ziel möglichst geringen Kornwachstums beim Sintern. Beispiele sind MgO·Al₂O₃-Spinellkeramik mit mittlerer Korngröße um 1 µm (US - 3,767,745) und Y-Al-Granatkeramiken mit ca. 5 µm Korngröße (US - 4,841,195). Bedingt durch eine gewisse Restporosität in den Korngrenzen dieser feinkörn i-gen Gefüge führte allerdings keine dieser Entwicklungen zu befriedigenden Transparenzwerten: US - 3,767,745 gibt keine Daten zur Quantifizierung des Grades erzielter Transparenz des Spinells, während für den genannten Granat bei 589 nm Wellenlänge trotz eines sehr großen Aperturwinkel von 8 ° (0,14 rad) eine Transmission gemessen wurde, die für z.B. 0.8 mm dicke Scheiben nur höchstens 57 % erreichte, was gerade 65 % des theoretischen Maximalwertes entspricht (US - 4,841,195). Derartig große (leider meist ungenannte) Öffnungswinkel der Lichtmessung haben für feinkörnige Spinellkeramiken mit Korngrößen zwischen 2 und 5 µm sogar zu Messergebnissen bis 80 % geführt, die im Unterschied zur o.a. wahren In-Line Transmission aber keine wirkliche Durchsichtigkeit (Transparenz) offenbaren: im Beispiel von EP - 334 760 A1 wird dies aus dem berichteten erheblichen Dickeneinfluss auf die sichtbare Transmission des gesinterten Spinells deutlich, weshalb zur Bestimmung der theoretischen Obergrenze richtigerweise die o.a. Beziehung Tₘₐₓ = (1-Rₛ)² für Materialien geringer Transparenz (ohne Mehrfachreflexion) verwendet wurde.

In der Folge hat deshalb der spezielle Vorteil *kubischer* transparenter Sinterkeramiken, hohe Transmissionswerte generell auch bei gröberen Gefügen erreichen zu können, die Entwicklung vorrangig in eine Richtung geführt, wo versucht wird, die restliche Porosität selbst beim Einsatz nanokristalliner Pulverrohstoffe mittels besonders *hoher Sintertemperaturen* zu eliminieren - unter Inkaufnahme starken Kornwachstums. In diesem Rahmen werden dann Herstellungstemperaturen von 1700 °C für Y₂O₃- und Y-Al-Granat-Keramiken als "Low temperature fabrication" bezeichnet, und die erzeugten Keramiken optimierter Transparenz zeigen trotz Verwendung von Nano-Pulvern (mittlerer Partikelgrößen um 70-100) schließlich *grobe* Gefüge mit mittleren Korngrößen um 20 µm (N. Saito u.a., J. Am. Ceram. Soc. (1998), 2023-2028; J.-G. Li u.a., J. Am. Ceram. Soc. (2000), 961-963). In Folge solch extremen Kornwachstums werden oft Poren intragranular in die wachsenden Kristallite eingeschlossen, so dass die an 1 mm dicken Scheiben - mit unspezifiziertem größerem Öffnungswinkel - gemessene In-Line Transmission bei einer Wellenlänge von z.B. 600-650 nm nur 42 % des theoretisch möglichen Maximalwertes erreicht; damit bleibt diese Transmission trotz des Vorteils der *kubischen* Kristallstruktur sogar hinter den Werten zurück, wie sie als RIT um 60 % (= 70 % des theoretischen Maximalwertes) unter sonst ähnlichen Messbedingungen für *trigonalen* Sinterkorund trotz dessen Doppelbrechung erzielt werden (A. Krell u.a , J. Am. Ceram. Soc. (2003) 12-18). Ähnlich wird an kubischem Y-stabilsiertem ZrO₂, dem zur Förderung des Kornwachstums Titan zudotiert wurde, die höchste Transmission für die mit 150 µm grobkörnigsten Gefüge erzielt (hier durch Kombination von Sintern bei 1700 °C mit heißisostatischer Nachverdichtung [HIP] bei 1500 °C), wobei dieser erzielte Höchstwert einer (ebenfalls unspezifizierten) Transmission durch eine 0,73 mm dünne Scheibe nur 64 % beträgt (K. Tsukuma u.a., Advances in Ceramics, Bd. 24 [Zirconia III, 1988], 287-291).

Im Übrigen zeigt letzteres Ergebnis für transparente ZrO₂-Keramik, dass der real erreichbaren Transmission selbst für herkömmliche *kubische* Sinterkeramik aus ZrO₂ Grenzen der Art gesetzt sind, dass umgekehrt ähnliche Transparenz-Ergebnisse auch mit *tetragonalem* ZrO₂ erzielbar sein sollten, solange das Achsverhältnis c/a der Elementarzelle nicht mehr als ca. 1,5 % vom Wert 1 (= kubisch) abweicht und also keine erhebliche Abweichung vom näherungsweise kubischen (optisch isotropen) Verhalten auftritt.

Auch *alternative Sinterverfahren* führten bisher nicht zur Entwicklung feinkörnigerer kubischer Transparentkeramiken. So wurde für eine per Mikrowellensintern erzeugte kubische AION-Keramik die höchste Transmission gerade mit der höchsten Sintertemperatur erzeugt (1800 °C), was zu einer mittleren Korngröße von 40-50 µm führte und die realisierte Lichttransmission im sichtbaren Bereich selbst bei nur 0,6 mm Probendicke auf niedrige ca. 43 % begrenzte (D. Agrawal u.a., Ceramic Trans. Bd. 134 [2002], 587-593).

Mit MgO·Al₂O₃-Spinell wurden zwar hohe Transmissionswerte erzielt, so RIT-Werte im sichtbaren Bereich um 60 % für 2 mm dicke Scheiben nach kombinierter Anwendung von Heißpressen (1400-1500 °C) mit HIP bei 1900 °C (A.F. Dericioglu u.a., J. Europ. Ceram. Soc. (2003), 951-959) oder, unter Zusatz von 1,5 % Li-Dotierung, auch eine Transmission nahe dem theoretischen Limit nach Heißpressen bei 1410 °C gefolgt von HIP bei 1500 °C (EP-447390 B1), jedoch war auch für diese Keramiken die mittlere Gefügekorngröße im ersten Beispiel stets > 150 µm, im zweiten ist sie ausgehend von einem als "submicron" beschriebenen Pulver als kleiner 150 µm angegeben.

Diese groben Gefüge reduzieren die *mechanischen* Kennwerte der im Vergleich zum trigonalen Korund schon stoffbedingt (als Einkristall) benachteiligten kubischen Keramiken noch weiter und führen zu niedrigeren Festigkeiten und leichterer Versetzungsaktivität mit niedriger Härte. So ist z.B. die Mikro-Härte (Prüflast 200 g) transparenter AION-Keramik mit 150 µm Korngröße nur 13,8 GPa, die von transparentem Spinell mit bimodaler Korngrößenverteilung zwischen 10-20 und 100-200 µm sogar nur 12,1 GPa (J.J. Swab u.a., Ceramic Trans. Bd. 122 [2001], 489-508)- was mit Härtewerten gleicher Messung für transparenten Sinterkorund von > 20 GPa verglichen werden muss und für die Anwendung als Schutzkeramik von besonderer Bedeutung ist: systematische Untersuchungen mit Sinterkorunden abgestufter Korngrößen und Härte haben gezeigt, dass die die antiballistische Schutzwirkung charakterisierende Masse-Effektivität der Keramiken mit einer von 21 auf 12 GPa sinkenden Härte um etwa 1/3 abnimmt (A. Krell u.a., Ceramic Trans. Bd 134 [2002], 463-471). Die bisher bekannten grobkörnigen kubischen Sinterkeramiken niedriger Härte erfordern deshalb für eine gleichwertige Schutzwirkung dickere Komponenten, was mit dem Nachteil höheren Gewichts einhergeht.

Aufgabe der Erfindung ist daher die Beschreibung von bisher unbekannten, mechanisch höher belastbaren transparenten Sinterkeramiken kubischer Kristallstruktur, welche eine hohe Transmission von RIT > 75 % des theoretischen Maximalwertes mit einer deutlich verbesserten Härte verbinden.

In Abkehr von bisherigen Entwicklungen hochdichter kubischer Transparent-Keramiken, die alle auf gröber strukturierte Gefüge zielten, wird die Aufgabe hier gelöst durch transparente polykristalline Sinterkeramiken kubischer Kristallstruktur, die im Unterschied zum bekannten Stand der Technik die für hohe Lichttransmission RIT > 75 % des theoretischen Maximalwertes erforderliche hohe relative Sinterdichte von mehr als 99,9 % verbinden mit einem feinkörnigen Gefüge, dessen mittlere Korngröße D im Bereich 60 nm < D < 10 µm liegt.
Weitere Härtesteigerungen werden vorteilhafterweise durch Gefüge mit 60 nm < D < 5 µm, besonders vorteilhafterweise mit 60 nm < D < 2 µm, und ganz besonders durch Submikrometer-Gefüge mit 60 nm < D < 1 µm erzielt.

Dagegen leisten noch feinere mittlere Korngrößen < 60 nm wegen der dann hohen Häufigkeit von Korngrenzen im Volumen keinen Beitrag zur angestrebten Verbesserung der mechanischen Kennwerte und sind daher nicht erfindungsgemäß.

Die erfindungsgemäße Kombination feinkörniger Gefüge mit hoher Dichte > 99,9 % erzielen diese kubischen Sinterkeramiken bei vergleichsweise niedrigen Herstellungstemperaturen (im Beispiel Mg-Al-Spinell typischerweise < 1500 °C); die Formgebung der Produkte erfolgt dazu vor dem Sintern mittels prinzipiell bekannter Verfahren, wie z.B. dem Vergießen gut dispergierter dünnflüssiger Suspensionen (z.B. Gelcasting, Schlickerguss, Druckfiltration, Zentrifugalguss), durch Extrusion oder Trockenpressen (einachsig oder kaltisostatisch).

Besonders vorteilhafte Lösungen im Sinne der Verbindung hoher Durchsichtigkeit und Härte ergeben sich auf der stofflichen Basis von Mg-Al-Spinell, Al-Oxynitrid, ZrO₂, Y₂O₃ oder Y-Al-Granat oder Mischgefügen aus diesen Komponenten. Aus o.a. Gründen sind hierbei ZrO₂-Sinterkeramiken der erwähnten geringen tetragonalen Verzerrung (c/a mit höchstens 1,5% Abweichung vom Wert 1) mit einbezogen.

Die Keramiken können bis zu 5 Masse-% zusätzliche Dotierungen enthalten, die im Kristallgitter als feste Lösungen, als separate Phase mit Kristallitgröße < 250 nm oder in beiden Formen vorliegen.

Besonders vorteilhaft für Anwendungen im Bereich der Panzerungs- und Schutzkeramiken bis hin zu thermomechanisch beanspruchten Fenstern hoher Durchsichtigkeit im sichtbaren wie im infraroten Bereich sind erfindungsgemäße Mg-Al-Spinellkeramiken höchster Härten > 13 GPa.

Mit der erfindungsgemäßen Lösung werden erstmals tatsächlich transparente polykristallin gesinterte Keramiken mit hohen mechanischen Kennwerten erreichbar.
Derartige Sinterkeramiken sind hinsichtlich ihrer Materialauswahl nur durch das Kriterium einer kubischen Kristallstruktur begrenzt.
Neben der vergleichsweise hohen Transparenz weisen die erfindungsgemäßen Keramiken auch hohe mechanische Eigenschaften auf, die durch die vergleichsweise geringe Partikelgröße bei minimaler Restporosität realisiert werden. Obwohl nach dem Stand der Technik bereits Magnesiumoxid-Aluminiumoxid-Spinelle mit mittleren Korngrößen von weniger als 150 µm prinzipiell angegeben sind (EP - 447390), ist der erfindungsgemäße Bereich der mittleren Korngröße in der Sinterkeramik im Stand der Technik nicht benannt, noch ist ein Hinweis auf eine geringere Korngröße erkennbar. Dies ist auch deshalb von Bedeutung, da eine zu feine mittlere Korngröße < 60 nm auch nicht mehr zur Verbesserung der mechanischen Eigenschaften führt.
Weiterhin sind tatsächlich transparente Sinterkeramiken mit hohen mechanischen Eigenschaften industriell derzeit nicht herstell- und auf dem Markt verfügbar. Dies insbesondere auch deshalb nicht, da die technische Entwicklungsrichtung über viele Jahre hinweg Verbesserungen in der Transparenz von Sinterkeramiken auf dem Wege der Verringerung der Porenanzahl gerade durch langen Sinterung bei hohen Temperaturen versucht hat. Eine derartige Sinterung führt zwangsweise zu einem verstärkten Kornwachstum und damit zur Verschlechterung der mechanischen Eigenschaften derartiger Sinterkeramiken.

Im weiteren wird die Erfindung an einem Ausführungsbeispiel näher erläutert.

### Beispiel

Verwendet wurde ein kommerzielles MgO·Al₂O₃-Spinellpulver mit 28 m²/g spezifischer Oberfläche. Nach Dispergierung in wässriger Umgebung wurden aus diesem Rohstoff scheibenartige Musterkörper geformt. Zur Herstellung von transparentem Material wurde eine niedrige Temperatur von nur 1480 °C drucklosen Sinterns mit nachfolgender heißisostatischer Nachverdichtung (HIP) bei 1450 °C verbunden.
Die resultierende Dichte war > 99,9 % (was mit üblichen Dichtemessmethoden nicht mehr genauer spezifizierbar ist), die mittlere Körngröße (ermittelt als das 1,56fache der mittleren Sehnenlänge) betrug 1,39 µm.

Diese Scheiben wurden planparallel geschliffen, zunächst mit einer Diamantschleifscheibe mit 91 µm Korngröße, dann mit einer feineren Körnung von 46 µm. Zur weiteren Verminderung der Oberflächenrauhigkeit wurden die Scheiben mit zunehmend feinerem Diamantkorn von 9 µm, 6 µm und schließlich 3 µm geläppt bzw. poliert. Die Dicke der Proben betrug schließlich 0,8 mm.
Die wahre In-Line-Transmission RIT = 78 % (= 90 % des theoretischen Maximalwertes) wurde mit rotem Licht (640 nm) mittels eines Spektrophotometers "LCRT-2006-06R/T Messgerät integral" (Fa. Gigahertz-Optik) bestimmt. RIT wurde damit auf eine Weise bestimmt, dass nur der Anteil durchgehenden Lichtes innerhalb eines Winkels von nicht mehr als 0,57 ° um die gerade Achse erfasst wurde.

Die Vickers-Mikrohärte beträgt mit Prüflast 200g HV0.2 = 14,8 ± 0.29 GPa, ist als Makrohärte HV10 = 13,8 ± 0.09 GPa und übertrifft damit signifikant bekannte Härten herkömmlicher transparenter gesinterter Spinell-Keramiken.

## Patentansprüche

1. Transparente polykristalline Sinterkeramik kubischer Kristallstruktur mit einer an 0,8 mm dicken polierten Scheiben und für Licht einer Wellenlänge zwischen 600 und 650 nm gemessenen wahren In-Line-Transmission RIT > 75 % des theoretischen Maximalwertes und einer mittleren Korngröße D im Bereich 60 nm < D < 10 µm.

2. Sinterkeramik nach Anspruch 1, mit einer mittleren Korngröße D im Bereich 60 nm < D < 5 µm.

3. Sinterkeramik nach Anspruch 1, mit einer mittleren Korngröße D im Bereich 60 nm < D < 2 µm.

4. Sinterkeramik nach Anspruch 1, mit einer mittleren Korngröße D im Bereich 60 nm < D < 1 µm.

5. Sinterkeramik nach Anspruch 1, die aus Mg-Al-Spinell, Al-Oxynitrid, ZrO₂, Y₂O₃ oder Y-Al-Granat oder aus einem Mischgefüge aus diesen Komponenten besteht.

6. Sinterkeramik nach Anspruch 1, die bis 5 Ma.-% zusätzliche Dotierungen enthält, die im Kristallgitter als feste Lösungen, als separate Phase mit Kristallitgröße < 250 nm oder in beiden Formen vorliegen.

7. Sinterkeramik nach Anspruch 1, bei der eine transparente Mg-Al-Spinellkeramik eine Vickers-Härte HV10 > 13 GPa aufweist.
